# FASCICULE DE BREVET EUROPEEN

(11) **EP 3 746 871 B1**
(45) Date de publication et mention de la délivrance du brevet: **11.06.2025**
(21) Numéro de dépôt: 19702094.4
(22) Date de dépôt: 01.02.2019
(51) Int. Cl.: G06F 3/0354

(54) **PROCEDE DE CONFIGURATION D'UNE SOURIS COMPRENANT AU MOINS QUATRE AXES**
VERFAHREN ZUM KONFIGURIEREN EINER MINDESTENS VIER ACHSEN UMFASSENDEN MAUS
METHOD FOR CONFIGURING A MOUSE COMPRISING AT LEAST FOUR AXES

(30) Priorité: 02.02.2018 FR 1850887
(43) Date de publication de la demande: 09.12.2020
(73) Titulaire: LEXIP, 73490 La Ravoire (FR)
(72) Inventeur: CHATAIGNIER, Lionel, 73490 La Ravoire (FR); CHATAIGNIER, Geoffrey, 73490 La Ravoire (FR); GIORGIS, Léo, 73490 La Ravoire (FR); LOI, Hugo, 73490 La Ravoire (FR)
(74) Mandataire: Novaimo
(86) Numéro de dépôt international: PCT/EP2019/052497
(87) Numéro de publication internationale: WO 2019/149886

(56) Documents cités:
- FR-A1- 3 025 902
- EVOLUENT: "Evoluent mouse manager", 25 March 2016 (2016-03-25), XP055501149, Retrieved from the Internet <URL:https://web.archive.org/web/20160325082228/https://evoluent.com/download/Win_Mouse_Manager_Instructions.pdf> [retrieved on 20180821]
- ANONYMOUS: "Adding mouse-clicks and timing-delays to macros", 31 August 2014 (2014-08-31), XP055501154, Retrieved from the Internet <URL:https://support.logitech.com/en_us/article/21597?product=a0qi00000069vCHAAY#click> [retrieved on 20180821]
- JITBIT SOFTWARE: "Jitbit Macro Recorder tutorial", YOUTUBE, 15 October 2012 (2012-10-15), pages 1 - 1, XP054978614, Retrieved from the Internet <URL:https://www.youtube.com/watch?v=PESMywgMBSk> [retrieved on 20180822]
- THEMAGICCMUSHROOM: "*2016* Logitech G Series: Macro Tutorial", YOUTUBE, 14 September 2016 (2016-09-14), pages 1 - 1, XP054978613, Retrieved from the Internet <URL:https://www.youtube.com/watch?annotation_id=annotation_3054888149&feature=iv&src_vid=pqjs9ytm69c&v=7QmiCgFmE5Y> [retrieved on 20180822]

## Description

### Domaine technique de l'invention

L'invention concerne un procédé de configuration d'une souris comprenant au moins quatre axes ou « degrés de liberté » et permettant de commander une application pour ordinateur telle qu'un logiciel tridimensionnel ou un jeu vidéo.

### État de la technique

Pour utiliser certains logiciels tridimensionnels, tels que des logiciels de conception assistée par ordinateur ou bien pour jouer à certains jeux vidéo, on connaît l'utilisation d'une souris évoluée comprenant au moins quatre degrés de liberté (autrement dit quatre axes), voire même six degrés de liberté. Une telle souris comporte une semelle portant un boîtier pour constituer un ensemble mobile en translation dans un plan selon deux axes horizontaux perpendiculaires, comme les souris standard dites bidimensionnelles. Le boîtier d'une telle souris est mobile par rapport à la semelle, de manière à pouvoir s'incliner en tournant autour d'un axe longitudinal horizontal, et en tournant autour d'un axe transversal horizontal, ce qui constitue deux axes supplémentaires. En variante ou en complément, la souris peut comprendre une manette saillante sur un côté de la souris et apte à être actionnée par un pouce d'un utilisateur, ce qui constitue encore deux axes supplémentaires. La souris peut émettre au moins autant de signaux d'information qu'elle possède de degrés de liberté, ce qui offre des possibilités de commande des logiciels ou des jeux vidéo particulièrement évoluées. Des exemples de souris sont décrit dans: XP055501149, XP055501154, XP054978614, XP054978613 et FR 3 025 902 A1.

Une telle souris est avantageuse en ce qu'elle permet des utilisations plus variées qu'une simple souris traditionnelle bidimensionnelle. Toutefois, elle requiert de la dextérité pour la manipuler et est complexe à paramétrer si bien que ses fonctionnalités ne sont pas toujours totalement exploitées par son utilisateur.

### Objet de l'invention

Le but de l'invention est de fournir un procédé de configuration d'une souris comprenant au moins quatre degrés de liberté remédiant aux inconvénients ci-dessus et améliorant les souris les procédés de configuration de telles souris connus de l'art antérieur. L' invention est définie par les revendications indépendantes.

L'invention se rapporte à un procédé de configuration d'une souris pour ordinateur, la souris comprenant au moins quatre degrés de liberté et étant apte à transmettre un signal d'information non binaire pour chaque degré de
liberté de la souris, le procédé de configuration comprenant :
- une première étape de définition d'un premier signal d'information apte à être émis par la souris, le premier signal d'information étant choisi dans une première liste par l'intermédiaire d'une interface homme-machine, notamment l'interface homme-machine comprenant un ordinateur et un écran,
- une deuxième étape de définition d'une première condition portant sur le premier signal d'information, la première condition étant choisie dans une deuxième liste par l'intermédiaire de l'interface homme-machine, et
- une troisième étape de définition d'une première instruction apte à être exécutée par un ordinateur, la première instruction étant choisie dans une troisième liste par l'intermédiaire de l'interface homme-machine.

Le procédé de configuration peut comprendre :
- une quatrième étape de définition d'un deuxième signal d'information apte à être émis par la souris, le deuxième signal d'information étant choisi dans la première liste par l'intermédiaire de l'interface homme-machine, et/ou
- une cinquième étape de définition d'une deuxième condition portant sur le premier signal d'information ou sur le deuxième signal d'information, la deuxième condition étant choisie dans la deuxième liste par l'intermédiaire de l'interface homme-machine, et/ou
- une sixième étape de définition d'une deuxième instruction apte à être exécutée par l'ordinateur, la deuxième instruction étant choisie dans la troisième liste par l'intermédiaire de l'interface homme-machine.

Ladite troisième liste peut comprendre :
- une instruction de déplacement d'un pointeur sur un écran selon une direction donnée par un premier et/ou un deuxième signal d'information, et/ou
- une instruction de déplacement d'un pointeur sur un écran selon une distance donnée par un troisième et/ou un quatrième signal d'information, et/ou
- une instruction de déplacement d'un pointeur sur un écran à une position préalablement mémorisée.

Le procédé de configuration peut comprendre une étape de définition d'une condition d'exécution, ladite première instruction et/ou ladite deuxième instruction étant apte à être exécutée par un ordinateur tant que la condition d'exécution est validée.

Le procédé de configuration peut comprendre une étape d'affichage sur un écran d'un logigramme dans lequel ledit premier et/ou ledit deuxième signal d'information est représenté par une première figure, ladite première et/ou ladite deuxième condition est représentée par une deuxième figure, et ladite première et/ou ladite deuxième instruction est représentée par une troisième figure.

Le procédé de configuration peut comprendre une étape de déplacement sur l'écran de ladite première figure, et/ou de ladite troisième figure au moyen de la souris.

Ladite deuxième figure peut être une flèche et le procédé de configuration peut comprendre une étape de création de ladite flèche au moyen de la souris, une première extrémité de la flèche étant reliée à la première figure, une deuxième extrémité de la flèche étant reliée à la troisième figure.

L'invention se rapporte également à un procédé d'utilisation d'une souris pour ordinateur, la souris comprenant au moins quatre degrés de liberté et étant apte à transmettre un signal d'information pour chaque degré de liberté de la souris, le procédé d'utilisation comprenant :
- une étape d'enregistrement d'une configuration de la souris obtenue par le procédé de configuration tel que défini précédemment, et
- une étape d'exécution de ladite première et/ou ladite deuxième instruction consécutivement à la validation de ladite première et/ou ladite deuxième condition.

Le procédé d'utilisation peut comprendre :
- une étape d'enregistrement d'un identifiant d'un logiciel, et
- une étape d'association de cet identifiant à une configuration de la souris obtenue par le procédé de configuration tel que défini précédemment.

L'invention se rapporte également à un système informatique comprenant un ordinateur, un écran et une souris comprenant au moins quatre degrés de liberté et étant apte à transmettre un signal d'information à l'ordinateur, le système informatique comprenant des moyens de mettre en œuvre le procédé de configuration tel que défini précédemment et/ou le procédé d'utilisation tel que défini précédemment.

La souris peut comprendre au moins deux boutons de préférence au moins trois boutons, notamment, quatre boutons et/ou la souris peut comprendre au moins six degrés de liberté.

La souris peut comprendre une semelle et un boîtier supérieur reliés l'un à l'autre par un dispositif de liaison autorisant le boîtier supérieur à s'incliner par rapport à la semelle et/ou en la souris peut comprendre une manette saillante depuis un flanc de la souris et apte à être actionnée par un pouce d'un utilisateur.

L'invention se rapporte également à un produit programme d'ordinateur comprenant des instructions qui, lorsque le programme est exécuté par un ordinateur, conduisent celui-ci à mettre en œuvre le procédé de configuration tel que défini précédemment et/ou le procédé d'utilisation tel que défini précédemment.

Support d'enregistrement lisible par ordinateur comprenant des instructions qui, lorsqu'elles sont exécutées par un ordinateur, conduisent celui-ci à mettre en œuvre le procédé de configuration tel que défini précédemment et/ou le procédé d'utilisation tel que défini précédemment.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue symbolique d'un système informatique selon un mode de réalisation de l'invention.
La figure 2 est une vue tridimensionnelle de dessus d'une souris à six axes.
La figure 3 est une vue tridimensionnelle de dessous de la souris.
La figure 4 est une vue schématique d'un premier logigramme de configuration de la souris.
La figure 5 est une vue schématique d'un deuxième logigramme de configuration de la souris.

### Description d'un mode de réalisation

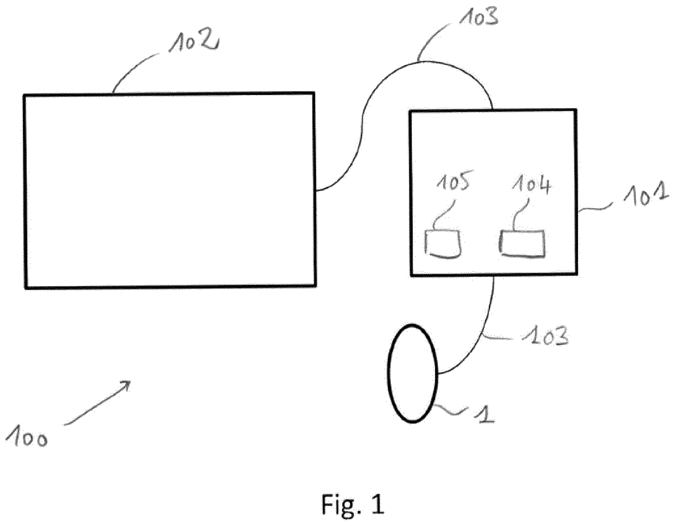

La figure 1 illustre un système informatique 100 comprenant un ordinateur 101, une souris 1 et un écran 102, l'écran et la souris étant reliés à l'ordinateur 101. Par « relié », on comprend que ces éléments sont connectés entre eux de sorte à pouvoir échanger des informations. Bien que représenté par des traits de liaison 103 sur la figure 1, ces liaisons peuvent être des liaisons sans fil. L'ordinateur 101 comprend une mémoire 104 et un microprocesseur 105, notamment apte à traiter des signaux d'information émis par la souris 1. L'écran est apte à projeter une image comprenant un pointeur (autrement dit, un curseur) que l'on peut déplacer sur l'écran en actionnant la souris. L'écran et la souris constituent ensemble une interface homme machine permettant à l'utilisateur d'échanger des informations avec l'ordinateur.

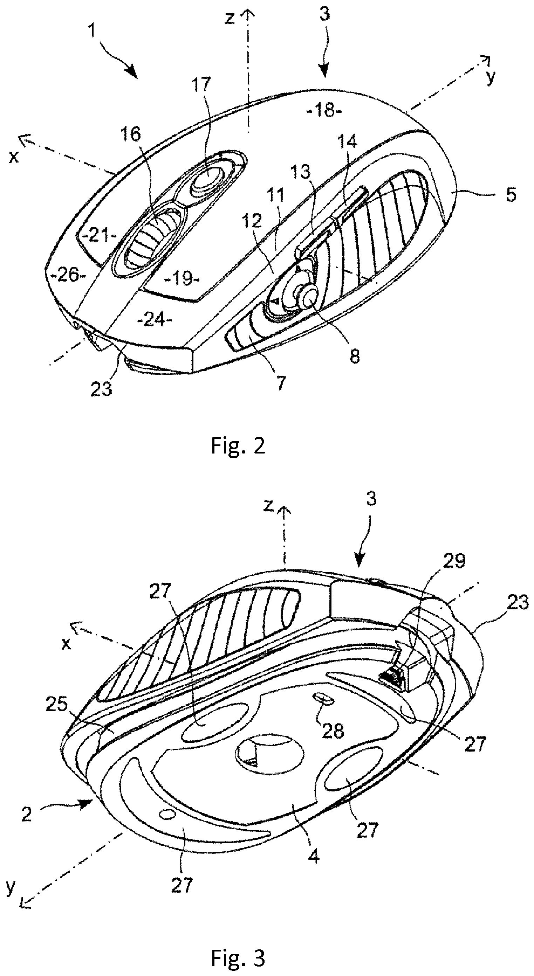

Comme visible sur les figures 2 et 3, la souris 1 comporte une semelle 2 portant un boîtier supérieur 3 qui a une forme générale bombée favorisant la prise en main par l'utilisateur. La semelle 2 comporte une face inférieure 4 plane par laquelle elle est en appui sur un plan sensiblement horizontal, tel qu'une table ou un tapis de souris, repéré par les deux axes perpendiculaires horizontaux x et y. La souris 1 est donc mobile en translation sur ce plan horizontal selon les deux axes horizontaux perpendiculaires x et y. Elle est également mobile en rotation autour d'un axe normal à ce plan, à savoir l'axe de lacet z. Le boîtier supérieur peut quant à lui être incliné selon un mouvement de roulis par rapport à la semelle en pivotant autour de l'axe transversal horizontal x, et il peut être incliné selon un mouvement de tangage en pivotant autour de l'axe longitudinal horizontal y.

Le boîtier supérieur 3 de la souris 1 est lié à la semelle 2 par un élément de liaison (non représenté) qui peut être une pièce pleine en caoutchouc ou analogue ayant une forme générale extérieure dite en diabolo ou encore biconique. Cet élément de liaison ou diabolo s'étend selon la direction verticale z et comprend une extrémité inférieure par laquelle il est rigidement solidarisé à la semelle 2, et une extrémité supérieure par laquelle il est rigidement solidarisé au boîtier supérieur 3. Cet élément de liaison peut permettre au boîtier supérieur 3 de pivoter par rapport à la semelle 2 autour des deux axes x et y. Dans la représentation donnée sur les figures, les axes x y et z forment les axes d'un repère orthogonal indirect passant chacun par le centre de symétrie C du diabolo. Il est à noter que la liaison entre la semelle et le boîtier supérieur interdit un déplacement du boîtier supérieur verticalement par rapport à la semelle, ainsi qu'un déplacement en rotation autour de l'axe z du boîtier supérieur par rapport à la semelle. La rotation du boîtier supérieur 3 par rapport à la semelle 2 autour de l'axe z est interdite notamment par le fait que la semelle 2 et le boîtier supérieur 3 ont des formes qui s'emboîtent partiellement l'une dans l'autre lorsque l'ensemble est monté, avec un certain jeu selon les axes x et y, ce qui permet au boîtier supérieur de s'incliner tout en lui interdisant de pivoter par rapport à la semelle autour de l'axe z.

D'une manière générale, le boîtier supérieur 3 comprend un corps de boîtier 5 supportant un ensemble d'actionneurs ainsi qu'un circuit imprimé dit supérieur, qui est rigidement solidarisée à ce corps de boîtier. Le corps de boîtier 5 comprend un flanc latéral gauche 7, sur lequel vient en appui le pouce d'un utilisateur saisissant la souris. Ce flanc latéral gauche 7 comprend une manette 8, située en partie avant et s'étendant selon une direction sensiblement parallèle à l'axe x, de manière à être manipulable par le pouce de l'utilisateur. La manette 8 est mobile en rotation autour de l'axe vertical z et autour de l'axe transversal y. Le corps de boîtier 5 comprend également une face supérieure bombée 11, qui délimite conjointement avec le flanc latéral gauche 7 une arête émoussée 12 portant deux boutons poussoirs 13 et 14 situés sensiblement à milongueur du flanc latéral gauche 7, et qui sont également actionnables par le pouce de l'utilisateur. La partie supérieure avant du corps de boîtier porte d'une part une molette 16 rotative manipulable par le majeur ou l'index de l'utilisateur ayant la souris en main, ainsi qu'un bouton poussoir supplémentaire 17 situé au dessus de la molette 16, et que l'utilisateur peut également actionner avec son majeur ou son index. En variante, la souris pourrait comprendre plus ou moins de boutons ou d'actionneurs et/ou ces boutons pourraient être positionnés différemment sur la souris. Par exemple, une souris analogue à celle que nous décrivons pourrait être obtenue par symétrie de sorte à a ce qu'elle soit adapté aux gauchers.

La face supérieure bombée 11 du corps de boîtier 5 est recouverte par une plaque additionnelle 18 bombée et souple, dont la partie avant présente deux branches 19 et 21 situées de part et d'autre de la molette 16 et du bouton poussoir 17. Ces deux branches 19 et 21 constituent respectivement une touche dite de clic gauche et une touche dite de clic droit actionnables respectivement par l'index et par le majeur d'un utilisateur droitier ayant la souris en main. Comme visible dans la figure 1, les deux branches 19 et 21 sont espacées de l'extrémité avant du corps de boîtier 5 qui est ici matérialisée notamment par une arête avant 23 ayant une forme courbe orientée transversalement. L'arête 23 est ainsi séparée longitudinalement de chacune de ces touches 21 et 22 respectivement par deux zones d'appui repérées par 24 et 26, ces zones d'appui faisant partie intégrante de l'avant du corps de boîtier 5. Le fait que les touches des clics gauche et droit soient séparées de l'extrémité avant du boîtier supérieur par deux zones d'appui 24 et 26 permet à l'utilisateur d'incliner le boîtier supérieur en roulis en exerçant directement des efforts sur ces zones d'appui 24 et 26, c'est-à-dire sans risque de cliquer de manière inopinée. En ce qui concerne la semelle 2, elle comporte elle aussi un corps de semelle 25 supportant un circuit imprimé dit inférieur ainsi que différents composants. Comme visible notamment sur la figure 3, la face inférieure 4 de ce corps de semelle est équipée d'un ensemble de patins 27 facilitant son glissement. Elle est par ailleurs équipée d'un capteur de déplacement de type laser, repéré par 28, et grâce auquel les mouvements de translation le long des axes x et y par rapport au support sont mesurés. Par ailleurs, cette semelle 2 comprend au niveau de sa partie avant un connecteur 29 du type mini-USB, grâce auquel la souris peut être reliée à un ordinateur de manière à transmettre ses informations, et/ou pour recharger une batterie intégrée à cette souris pour lui permettre d'échanger des informations avec l'ordinateur par une liaison sans fil.

Le circuit imprimé dit inférieur est rigidement solidarisé à la semelle et porte lui-même différents composants dont un accéléromètre dit inférieur rigidement solidarisé à ce circuit imprimé. Ce circuit imprimé inférieur porte également des composants propres au connecteur mini-USB, au capteur laser 28, et à d'autres constituants. De manière analogue, le circuit imprimé, dit supérieur, est rigidement solidaire du corps de boîtier 5. Ce circuit imprimé supérieur porte un accéléromètre dit supérieur, lui aussi rigidement solidaire du circuit imprimé qui le porte, ainsi qu'un ensemble de composants propres à la molette 16, à la manette 8 et aux boutons poussoir 13, 14, 17. Ces deux circuits imprimés sont électriquement reliés l'un à l'autre par un connecteur, de telle manière que les informations issues du circuit imprimé supérieur, tel que l'état enfoncé de l'un ou l'autre des clics gauche et droit, la position de la roue 16 ou encore la position de la manette 8 sont transmises au circuit imprimé inférieur.

Les deux accéléromètres sont exploités conjointement par une unité de calcul, telle qu'un microcontrôleur, équipant par exemple le circuit imprimé inférieur, pour déterminer l'inclinaison du boîtier supérieur 3 par rapport à la semelle 2.

Les deux accéléromètres sont avantageusement des composants électroniques identiques de manière à simplifier le traitement des signaux qu'ils délivrent. Il s'agit avantageusement d'accéléromètres sous forme de composants électroniques MEMS de type LIS331DLH commercialisés sous la marque ST^{®}. Chaque accéléromètre fournit des signaux représentatifs des accélérations qu'il subit selon trois axes orthogonaux qui lui sont propres, et ces signaux sont adressés au microcontrôleur équipant le circuit imprimé inférieur. Les signaux issus des accéléromètres et sont traités par le microcontrôleur pour déterminer l'inclinaison du boîtier supérieur 3 par rapport à la semelle 2, d'une part autour de l'axe x, et d'autre part autour de l'axe y. A cet effet, le microcontrôleur récupère à chaque instant les signaux représentatifs de l'accélération subie par l'accéléromètre supérieur et par l'accéléromètre inférieur selon l'axe x.

Finalement, la souris est apte à transmettre six signaux d'information à l'ordinateur 101, correspondant chacun à un degré de liberté de la souris auxquels s'ajoutent des signaux d'information binaires pour chacun des boutons de la souris et pour la molette. Un premier signal d'information comprend une information relative au déplacement en translation de la souris parallèlement à l'axe transversal x. Un deuxième signal d'information comprend une information relative au déplacement en translation de la souris parallèlement à l'axe longitudinal y. Un troisième signal d'information comprend une information relative à la rotation du boîtier supérieur autour de l'axe transversal x. Un quatrième signal d'information comprend une information relative à la rotation du boîtier supérieur autour de l'axe longitudinal y. Un cinquième signal d'information comprend une information relative à la rotation de la manette 8 autour de l'axe vertical z. Un sixième signal d'information comprend une information relative à la rotation de la manette 8 autour de l'axe longitudinal y.

L'ordinateur comprend un logiciel de paramétrage (autrement dit un logiciel de configuration) de la souris agissant comme un filtre entre les signaux d'information transmis par la souris et les informations réceptionnées par d'autres logiciels ou applications de l'ordinateur. Le logiciel de paramétrage permet de convertir les signaux d'information issus de la souris en signaux directement exploitables par les différents logiciels. Le logiciel de paramétrage est enregistré dans la mémoire 104 de l'ordinateur et peut être exécuté par son microprocesseur 105.

Par exemple, la souris peut être utilisée pour commander un logiciel permettant de représenter un objet tridimensionnel comme par exemple un logiciel de conception assistée par ordinateur. La rotation du boîtier supérieur 3 de la souris par rapport à la semelle 2 peut être associée à une commande de rotation de l'objet tridimensionnel affiché à l'écran. Ainsi, l'utilisateur peut faire pivoter cet objet selon deux axes perpendiculaires pour l'observer sous tous ses angles. La rotation de la manette 8 peut être par exemple associée à une commande de déplacement en translation de l'objet tridimensionnel affiché à l'écran. Ainsi, l'utilisateur peut déplacer cet objet dans le plan de l'écran en manipulant la manette 8 avec son pouce. Enfin, le déplacement du pointeur sur l'écran peut être associé au déplacement de la souris sur un plan comme c'est le cas lorsqu'on utilise une souris conventionnelle. Ainsi, l'utilisateur peut également se servir de la souris pour accéder à différentes options et commandes du logiciel. Ainsi, grâce à la souris et au logiciel de paramétrage dédié, l'utilisateur peut utiliser un logiciel tridimensionnel en utilisant exclusivement ou quasiment exclusivement la souris alors qu'auparavant il était nécessaire de combiner l'usage de la souris avec une main et l'usage d'un clavier avec l'autre main. Par conséquent, l'utilisation de tels logiciels est plus accessible : on peut les utiliser avec des systèmes informatiques dépourvus de clavier. L'accès à ces logiciels devient également possible aux personnes handicapées d'un bras ou d'une main et ne disposant que de l'autre main pour travailler ou pour jouer. Ou encore, l'utilisateur peut se servir de son autre main pour générer d'autres commandes ce qui permet d'utiliser un ordinateur avec une plus grande efficacité. Bien sûr d'autres paramétrages de la souris que celui que nous venons de présenter sont envisageables pour manipuler l'objet tridimensionnel.

Le logiciel de paramétrage peut comprendre une ou plusieurs configurations prédéfinies propres à l'utilisation de certaines applications ou logiciels. L'utilisateur peut également modifier une configuration existante ou créer une nouvelle configuration utilisable pour toutes les applications de l'ordinateur ou pour une sélection d'applications de l'ordinateur. A cet effet, l'utilisateur dispose d'une interface telle qu'un panneau de configuration. Le logiciel de paramétrage de la souris met en œuvre un procédé de configuration de la souris. Ce procédé de configuration comprend différentes étapes que nous allons détailler.

Dans une première étape, on définit, autrement dit on sélectionne, un premier signal d'information 31 apte à être émis par la souris, le premier signal d'information 31 étant choisi dans une première liste. A titre d'exemple la première liste peut contenir tout ou partie des signaux d'information suivant :
- un déplacement en translation de la souris parallèlement à l'axe transversal x, et/ou
- un déplacement en translation de la souris parallèlement à l'axe longitudinal y, et/ou
- un déplacement en translation quelconque de la souris, et/ou
- une rotation du boîtier supérieur autour de l'axe transversal x, et/ou
- une rotation du boîtier supérieur autour de l'axe longitudinal y, et/ou
- une rotation quelconque du boîtier supérieur, et/ou
- une rotation de la manette 8 autour de l'axe vertical z, et/ou
- une rotation de la manette 8 autour de l'axe longitudinal y, et/ou
- une rotation quelconque de la manette 8, et/ou
- une activation du bouton poussoir 13, et/ou
- une activation du bouton poussoir **14,** et/ou
- une activation du bouton poussoir 17, et/ou
- une activation de la molette 16, et/ou
- une activation du clic gauche, et/ou
- une activation du clic droit.
La sélection peut être faite par exemple en utilisant la souris, par exemple en cliquant sur le signal d'information souhaité dans un menu déroulant.

Dans une deuxième étape, on définit une première condition 32 portant sur le premier signal d'information 31, la première condition 32 étant choisie dans une deuxième liste. Cette deuxième liste peut être différente pour chaque signal d'information sélectionné lors de la première étape. Par exemple, si le signal d'information sélectionné lors de la première étape est « une rotation quelconque du boîtier supérieur », alors la condition peut être « une rotation du boîtier supérieur 4 supérieure à un angle donné » ou bien « une rotation du boîtier supérieur 4 effectuée en direction d'un secteur angulaire donné », par exemple « une inclinaison du boîtier supérieur vers l'avant » ou bien « une inclinaison du boîtier supérieur vers le côté droit ». La définition de la première condition 32 peut éventuellement être complétée par la saisie d'une valeur numérique. Suivant un autre exemple, si le signal d'information sélectionné lors de la première étape est une activation d'un des boutons de la souris, alors la condition associée peut être « un appui sur ledit bouton ». Enfin, l'utilisateur a la possibilité de définir une condition comme systématiquement remplie, c'est-à-dire que la condition est systématiquement validée.

Dans une troisième étape, on définit une première instruction 33 apte à être exécutée par un ordinateur, la première instruction 33 étant choisie dans une troisième liste. Cette troisième liste peut comprendre des actions habituellement effectuées avec la souris, avec un clavier, voire même la combinaison d'actions effectuées par le clavier et par la souris. Par exemple, la troisième liste peut comprendre :
- une instruction produisant l'effet d'un appui sur l'une quelconque des touches d'un clavier, et/ou
- une instruction produisant l'effet d'un appui simultané sur plusieurs touches du clavier, et/ou
- une instruction de déplacement du pointeur sur l'écran selon une direction donnée par un premier et/ou un deuxième signal d'information ou selon une direction prédéfinie, et/ou
- une instruction de déplacement d'un pointeur sur un écran selon une distance donnée par un troisième et/ou un quatrième signal d'information ou selon une distance prédéfinie, et/ou
- une instruction de déplacement d'un pointeur sur un écran à une position préalablement mémorisée.

L'instruction 33 peut être définie pour être exécutée une seule fois ou bien tant qu'une condition d'exécution est validée. Cette condition d'exécution peut être par exemple une condition temporelle, c'est-à-dire que l'instruction sera répétée ou prolongée pendant une durée donnée. La condition d'exécution peut également être une condition portant sur un signal d'information : c'est-à-dire que l'instruction sera répétée ou prolongée tant qu'un signal d'information donné valide la condition d'exécution, par exemple « tant qu'un des boutons de la souris demeure appuyé » ou « tant que le boîtier supérieur demeure incliné au-delà d'un certain angle ». Enfin, la condition d'exécution peut également porter sur un nombre d'exécution prédéfini de la même instruction. La définition de l'instruction 33 peut éventuellement être complétée par la saisie d'une valeur numérique.

Au cours de la première, deuxième et troisième étape, on affiche sur l'écran, un premier logigramme 30, autrement dit un schéma synoptique, dans lequel :
- le signal d'information 31 défini lors de la première étape est représenté par une première figure,
- la condition 32 définie lors de la deuxième étape est représentée par une deuxième figure,
- l'instruction 33 définie lors de la troisième étape est représentée par une troisième figure.

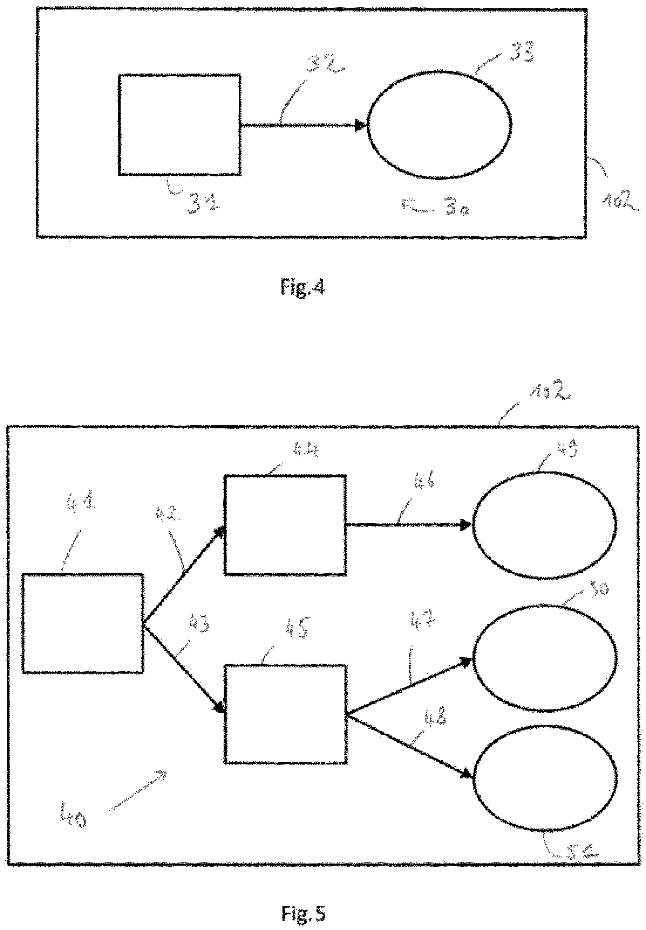

La figure 4 illustre schématiquement un écran sur lequel est affiché le premier logigramme 30. Sur l'exemple de la figure 4, la première figure est représentée par un rectangle, la deuxième figure est représentée par une flèche et la troisième figure est représentée par un ovale 33. Ces formes pourraient être néanmoins différentes. On dispose ainsi d'une représentation schématique du paramétrage, autrement dit de la configuration de la souris. Avantageusement, lorsqu'une condition d'exécution est associée à une instruction, un symbole comme par exemple un symbole représentant un cycle (une forme circulaire avec une flèche ou une forme triangulaire avec une flèche) peut apparaitre sur la figure correspondante. Le paramétrage obtenu est visuel donc aisément compréhensible et réalisable par toute personne sans besoin de connaissance spécifique en programmation.

Avantageusement, le premier logigramme 30 est créé graphiquement. Pour définir un signal d'information 31 conformément à la première étape, on déplace la première figure d'une première zone de l'écran à une deuxième zone de l'écran. La première zone de l'écran est une zone de sélection dans laquelle sont disposées différentes figures. La deuxième zone de l'écran est une zone active dans laquelle le premier logigramme est défini. L'utilisateur fait glisser la première figure de la première zone à la deuxième zone par un mouvement dit de « glisser-déposer » ou de « drag and drop », c'est-à-dire qu'il clique sur la première figure dans la première zone, maintient le bouton enfoncé, déplace la figure de la première zone à la deuxième zone, puis relâche le bouton à l'endroit ou il souhaite déposer la première figure. L'utilisateur procède de la même manière pour définir une instruction 33 conformément à la troisième étape, en déplaçant la troisième figure de la première zone vers la deuxième zone. La définition du signal d'information 31 ou de l'instruction 33 peut être complétée par un choix dans un menu contextuel apparaissant lorsqu'on clique sur la figure concernée. Pour définir une condition 32 conformément à la deuxième étape, l'utilisateur clique avec un bouton sur un bord de la première figure et relâche le bouton lorsque le pointeur est au niveau d'un bord de la troisième figure. Ce geste fait apparaitre une flèche de la première figure vers la troisième figure. La condition peut alors être définie précisément en accédant à un menu contextuel, par exemple en effectuant un clic sur la flèche. En variante, la création graphique du premier logigramme 30 pourrait être réalisée différemment.

On comprend donc que affichage du logigramme est réalisé concomitamment aux première, deuxième et troisième étapes. C'est-à-dire que le logigramme 30 est affiché à l'écran au fur et à mesure de sa création. La deuxième étape est réalisée après la première étape et après la troisième étape.

La première, la deuxième et la troisième étape peuvent être renouvelés chacune autant de fois que nécessaire pour réaliser des logigrammes plus complexes, comme par exemple le deuxième logigramme 40, représenté sur la figure 5. Deux conditions différentes ou même identiques peuvent être reliées à un même signal d'information pour donner lieu à deux instructions différentes.

Dans le deuxième logigramme 40, illustré sur la figure 5, trois signaux d'information 41, 44, 45 sont définis. Le premier signal d'information 41 est défini comme « une rotation quelconque du boîtier supérieur ». Le deuxième signal d'information 44 est défini comme « une rotation quelconque de la manette 8 ». Le troisième signal d'information 45 est défini comme « un appui sur l'un quelconque des boutons de la souris ».

Trois instructions 49, 50, 51 sont également définies. La première instruction consiste en « un déplacement du curseur de la souris dans la direction 49 donnée par l'inclinaison du boîtier supérieur selon une distance proportionnelle à l'inclinaison de la manette 8 ». La deuxième instruction 50 consiste en « un appui sur la touche « A » du clavier. La troisième instruction 51 consiste en « un appui simultané sur la touche « Ctrl » et sur la touche « A »du clavier ».

Cinq conditions 42, 43, 46, 47, 48 sont également définies conformément au schéma de la figure 5. La première condition 42, définie entre le signal d'information 41 et le signal d'information 44, est remplie si « le boîtier supérieur est pivoté vers l'arrière ». La deuxième condition 43, définie entre le signal d'information 41 et le signal d'information 45, est remplie si « le boîtier supérieur est pivoté vers l'avant ». La troisième condition 46, définie entre le signal d'information 44 et l'instruction 49, est systématiquement remplie. La quatrième condition 47, définie entre le signal d'information 45 et l'instruction 50, est remplie si « aucun clic sur l'un quelconque des boutons n'est détecté ». La cinquième condition 48, définie entre le signal d'information 45 et l'instruction 51, est remplie si « une activation du clic droit de la souris est détectée ».

La configuration de la souris est enregistrée dans la mémoire 104 de l'ordinateur. En variante, la souris pourrait également comprendre une mémoire propre dans laquelle serait sauvegardée cette configuration. Cela permettrait une exécution des actions définies par le logigramme directement par le biais d'un protocole USB et sans retraitement par un logiciel fonctionnant sur l'ordinateur, ce qui diminuerait sensiblement la latence d'action. On obtient ainsi une configuration de la souris que l'on peut affecter à une application en particulier ou bien à l'ensemble des applications de l'ordinateur. Pour ce faire, on peut associer l'identifiant d'une ou plusieurs applications à la configuration préalablement définie. Il est possible de répéter le procédé décrit pour obtenir différentes configurations de la souris que l'on peut affecter librement aux applications de l'ordinateur.

Lorsqu'on utilise l'ordinateur, le microprocesseur 105 de l'ordinateur active la ou les configurations de la souris en fonction de l'application utilisée. Il vérifie si les conditions prédéfinies dans ces configurations sont validées. Si c'est le cas, il exécute les instructions telles que définies dans ces configurations.

Grâce à ce procédé de configuration de la souris, un utilisateur peut transformer une souris générique en une souris spécialement adaptée aux logiciels qu'il utilise, aux opérations qu'il effectue couramment, ou encore à la dextérité qu'il possède. Avantageusement, le procédé de configuration ne requiert aucune connaissance en programmation et est particulièrement intuitif grâce à l'interface visuelle décrite précédemment. Des configurations complexes de la souris peuvent être définies sans que l'utilisateur n'ait besoin d'écrire une seule ligne de code informatique. De plus, la configuration de la souris peut être réalisée uniquement au moyen de la souris elle-même ce qui est particulièrement cohérent avec l'usage qui est en fait. La configuration de la souris peut être réalisée avec un système informatique dépourvu de clavier et est réalisable par des personnes handicapées d'un bras ou d'une main et ne disposant que de l'autre main pour travailler. Bien que la souris offre de nombreuses possibilités d'action, elle demeure simple à paramétrer ou à configurer.

Un paramétrage de la souris spécifique à certains jeux vidéo peut également être défini. Par exemple, pour le jeu vidéo « League of Legends^{®} » ou pour des jeux vidés similaires, un paramétrage particulier permet d'envoyer une succession de commandes à un personnage contrôlé par le joueur. L'utilisation d'une souris classique pour contrôler un personnage du jeu vidéo nécessiterait de nombreux clics et de nombreux déplacements de la souris, réalisés à grande vitesse alors que la souris selon l'invention permet de parvenir au même résultat de manière encore plus rapide et de manière moins traumatisante pour le joueur. La souris peut également être avantageusement paramétrée pour l'utilisation du jeu vidéo « Minecraft^{®} » ou pour des jeux vidés similaires de manière à dupliquer efficacement des constructions virtuelles et tridimensionnelles de ce jeu. Avantageusement, la position initiale du curseur sur l'écran est mémorisée avant d'exécuter les instructions définies dans un logigramme. Lorsque toutes les instructions ont été exécutées, le curseur est repositionné à sa position initiale.

## Revendications

1. Procédé de configuration d'une souris (1) pour ordinateur (101), la souris (1) comprenant au moins quatre degrés de liberté et étant apte à transmettre un signal d'information (31) non binaire pour chaque degré de liberté de la souris (1),
**caractérisé en ce qu'**il comprend :
- une première étape de définition d'un premier signal d'information (31) apte à être émis par la souris (1), le premier signal d'information (31) étant choisi dans une première liste par l'intermédiaire d'une interface homme-machine, notamment l'interface homme-machine comprenant un ordinateur (101) et un écran (102),
- une deuxième étape de définition d'une première condition (32) portant sur le premier signal d'information (31), la première condition (32) étant choisie dans une deuxième liste par l'intermédiaire de l'interface homme-machine, et
- une troisième étape de définition d'une première instruction (33) apte à être exécutée par un ordinateur (101), la première instruction (33) étant choisie dans une troisième liste par l'intermédiaire de l'interface homme-machine.

2. Procédé de configuration selon la revendication précédente, **caractérisé en ce que** la souris comprend une semelle et un boîtier supérieur reliés l'un à l'autre par un dispositif de liaison autorisant le boîtier supérieur à s'incliner par rapport à la semelle et/ou **en ce que** la souris comprend une manette saillante depuis un flanc de la souris et apte à être actionnée par un pouce d'un utilisateur,
et **en ce que** lesdits signaux d'information sont choisis parmi :
- un premier signal d'information comprenant une information relative au déplacement en translation de la souris parallèlement à un axe transversal (x) ;
- un deuxième signal d'information comprenant une information relative au déplacement en translation de la souris parallèlement à un axe longitudinal (y) ;
- un troisième signal d'information comprenant une information relative à la rotation d'un boîtier supérieur de la souris autour de l'axe transversal (x) par rapport à une semelle de la souris ;
- un quatrième signal d'information comprenant une information relative à la rotation du boîtier supérieur autour de l'axe longitudinal (y),
- un cinquième signal d'information comprenant une information relative à la rotation d'un manette (8) autour d'un axe vertical (z), la manette étant saillante sur un côté de la souris et apte à être actionnée par un pouce d'un utilisateur;
- un sixième signal d'information comprenant une information relative à la rotation de la manette (8) autour de l'axe longitudinal (y).

3. Procédé de configuration selon l'une des revendications précédentes, **caractérisé en ce qu'**il comprend :
- une quatrième étape de définition d'un deuxième signal d'information (31, 41, 44, 45) apte à être émis par la souris (1), le deuxième signal d'information (31, 41, 44, 45) étant choisi dans la première liste par l'intermédiaire de l'interface homme-machine, et/ou
- une cinquième étape de définition d'une deuxième condition (32, 42, 43, 46, 47, 48) portant sur le premier signal d'information (31, 41, 44, 45) ou sur le deuxième signal d'information (31, 41, 44, 45), la deuxième condition (32, 42, 43, 46, 47, 48) étant choisie dans la deuxième liste par l'intermédiaire de l'interface homme-machine, et/ou
- une sixième étape de définition d'une deuxième instruction (33, 49, 50, 51) apte à être exécutée par l'ordinateur (101), la deuxième instruction (33, 49, 50, 51) étant choisie dans la troisième liste par l'intermédiaire de l'interface homme-machine.

4. Procédé de configuration d'une souris (1) selon l'une des revendications précédentes, **caractérisé en ce que** ladite troisième liste comprend :
- une instruction de déplacement d'un pointeur sur un écran (102) selon une direction donnée par un premier et/ou un deuxième signal d'information, et/ou
- une instruction de déplacement d'un pointeur sur un écran (102) selon une distance donnée par un troisième et/ou un quatrième signal d'information, et/ou
- une instruction de déplacement d'un pointeur sur un écran (102) à une position préalablement mémorisée.

5. Procédé de configuration d'une souris (1) selon l'une des revendications précédentes, **caractérisé en ce qu'**il comprend une étape de définition d'une condition d'exécution, ladite première instruction et/ou ladite deuxième instruction étant apte à être exécutée par un ordinateur (101) tant que la condition d'exécution est validée.

6. Procédé de configuration d'une souris (1) selon l'une des revendications précédentes, **caractérisé en ce qu'**il comprend une étape d'affichage sur un écran (102) d'un logigramme (30, 40) dans lequel ledit premier et/ou ledit deuxième signal d'information (31, 41, 44, 45) est représenté par une première figure, ladite première et/ou ladite deuxième condition (32, 42, 43, 46, 47, 48) est représentée par une deuxième figure, et ladite première et/ou ladite deuxième instruction (33, 49, 50, 51) est représentée par une troisième figure.

7. Procédé de configuration d'une souris (1) selon la revendication précédente, **caractérisé en ce qu'**il comprend une étape de déplacement sur l'écran (102) de ladite première figure, et/ou de ladite troisième figure au moyen de la souris (1).

8. Procédé de configuration d'une souris (1) selon l'une des revendications 5 ou 6, **caractérisé en ce que** ladite deuxième figure est une flèche et **en ce qu'**il comprend une étape de création de ladite flèche au moyen de la souris (1), une première extrémité de la flèche étant reliée à la première figure, une deuxième extrémité de la flèche étant reliée à la troisième figure.

9. Procédé d'utilisation d'une souris (1) pour ordinateur (101), la souris (1) comprenant au moins quatre degrés de liberté et étant apte à transmettre un signal d'information (31) pour chaque degré de liberté de la souris (1), **caractérisé en ce qu'**il comprend :
- la mise en œuvre du procédé de configuration selon l'une des revendications précédentes,
- une étape d'enregistrement d'une configuration de la souris (1) obtenue par ledit procédé de configuration, et
- une étape d'exécution de ladite première et/ou ladite deuxième instruction (33, 49, 50, 51) consécutivement à la validation de ladite première et/ou ladite deuxième condition (32, 42, 43, 46, 47, 48).

10. Procédé d'utilisation d'une souris (1) pour ordinateur (101), la souris (1) comprenant au moins quatre degrés de liberté et étant apte à transmettre un signal d'information (31) pour chaque degré de liberté de la souris (1), **caractérisé en ce qu'**il comprend :
- une étape d'enregistrement d'un identifiant d'un logiciel,
- la mise en œuvre du procédé de configuration selon l'une des revendications 1 à 8, et
- une étape d'association de cet identifiant à une configuration de la souris (1) obtenue par ledit procédé de configuration.

11. Système informatique (100) comprenant un ordinateur (101), un écran (102) et une souris (1) comprenant au moins quatre degrés de liberté et étant apte à transmettre un signal d'information à l'ordinateur (101), **caractérisé en ce qu'**il comprend des moyens de mettre en œuvre un procédé de configuration selon l'une des revendications 1 à 8 et/ou un procédé d'utilisation selon l'une des revendications 9 à 10.

12. Système informatique (100) selon la revendication précédente, **caractérisé en ce que** la souris (1) comprend au moins deux boutons (13, 14, 17, 19, 21) de préférence au moins trois boutons, notamment, quatre boutons et/ou **en ce que** la souris (1) comprend au moins six degrés de liberté.

13. Système informatique (100) selon l'une des revendications 11 ou 12, **caractérisé en ce que** la souris (1) comprend une semelle (2) et un boîtier supérieur (3) reliés l'un à l'autre par un dispositif de liaison autorisant le boîtier supérieur (3) à s'incliner par rapport à la semelle (2) et/ou **en ce qu'**elle comprend une manette (8) saillante depuis un flanc (7) de la souris (1) et apte à être actionnée par un pouce d'un utilisateur.

14. Produit programme d'ordinateur comprenant des instructions qui, lorsque le programme est exécuté par un ordinateur (101), conduisent celui-ci à mettre en œuvre le procédé de configuration selon l'une des revendications 1 à 8 et/ou un procédé d'utilisation selon l'une des revendications 9 à 10.

15. Support d'enregistrement lisible par ordinateur (101) comprenant des instructions qui, lorsqu'elles sont exécutées par un ordinateur (101), conduisent celui-ci à mettre en œuvre le procédé de configuration selon l'une des revendications 1 à 8 et/ou un procédé d'utilisation selon l'une des revendications 9 à 10.

## Patentansprüche

1. Verfahren zur Konfiguration einer Computermaus (1) für einen Computer (101), wobei die Maus (1) mindestens vier Freiheitsgrade aufweist und in der Lage ist, für jeden Freiheitsgrad ein nicht-binäreres Informationssignal (31) zu übertragen,
**dadurch gekennzeichnet, dass** es umfasst:
• einen ersten Schritt zur Definition eines ersten Informationssignals (31), das von der Maus (1) gesendet werden kann, wobei das erste Informationssignal (31) über eine Mensch-Maschine-Schnittstelle aus einer ersten Liste ausgewählt wird, insbesondere wobei die Mensch-Maschine-Schnittstelle einen Computer (101) und einen Bildschirm (102) umfasst,
• einen zweiten Schritt zur Definition einer ersten Bedingung (32) in Bezug auf das erste Informationssignal (31), wobei die erste Bedingung (32) über die Mensch-Maschine-Schnittstelle aus einer zweiten Liste ausgewählt wird, und
• einen dritten Schritt zur Definition einer ersten Anweisung (33), die von einem Computer (101) ausgeführt werden kann, wobei die erste Anweisung (33) über die Mensch-Maschine-Schnittstelle aus einer dritten Liste ausgewählt wird.

2. Konfigurationsverfahren nach Anspruch 1, **dadurch gekennzeichnet, dass** die Maus eine Sohle und ein oberes Gehäuse umfasst, die durch eine Verbindungsvorrichtung miteinander verbunden sind, welche das Neigen des oberen Gehäuses relativ zur Sohle ermöglicht, und/oder dass die Maus einen aus einer Seitenfläche hervorstehenden Steuerknüppel umfasst, der durch einen Daumen des Benutzers betätigt werden kann, und dass die Informationssignale aus folgenden Signalen ausgewählt werden:
• ein erstes Informationssignal, das eine Information über eine Translation der Maus entlang einer Querachse (x) enthält;
• ein zweites Informationssignal, das eine Information über eine Translation der Maus entlang einer Längsachse (y) enthält;
• ein drittes Informationssignal, das eine Information über eine Rotation des oberen Gehäuses der Maus um die Querachse (x) relativ zur Sohle enthält;
• ein viertes Informationssignal, das eine Information über eine Rotation des oberen Gehäuses um die Längsachse (y) enthält;
• ein fünftes Informationssignal, das eine Information über eine Rotation eines Steuerknüppels (8) um eine Vertikalachse (z) enthält, wobei der Steuerknüppel an einer Seite der Maus hervorsteht und durch einen Daumen des Benutzers betätigt werden kann;
• ein sechstes Informationssignal, das eine Information über eine Rotation des Steuerknüppels (8) um die Längsachse (y) enthält.

3. Konfigurationsverfahren nach einem der vorhergehenden Ansprüche, **dadurch gekennzeichnet, dass** es umfasst:
• einen vierten Schritt zur Definition eines zweiten Informationssignals (31, 41, 44, 45), das von der Maus (1) gesendet werden kann, wobei dieses zweite Informationssignal (31, 41, 44, 45) über die Mensch-Maschine-Schnittstelle aus der ersten Liste ausgewählt wird, und/oder
• einen fünften Schritt zur Definition einer zweiten Bedingung (32, 42, 43, 46, 47, 48) in Bezug auf das erste oder das zweite Informationssignal (31, 41, 44, 45), wobei die zweite Bedingung (32, 42, 43, 46, 47, 48) über die Schnittstelle aus der zweiten Liste ausgewählt wird, und/oder
• einen sechsten Schritt zur Definition einer zweiten Anweisung (33, 49, 50, 51), die vom Computer (101) ausführbar ist, wobei die zweite Anweisung (33, 49, 50, 51) über die Schnittstelle aus der dritten Liste ausgewählt wird.

4. Konfigurationsverfahren einer Maus (1) nach einem der vorhergehenden Ansprüche, **dadurch gekennzeichnet, dass** die dritte Liste umfasst:
• eine Anweisung zur Bewegung eines Cursors auf einem Bildschirm (102) in eine Richtung, die durch ein erstes und/oder zweites Informationssignal vorgegeben ist, und/oder
• eine Anweisung zur Bewegung eines Cursors auf einem Bildschirm (102) über eine durch ein drittes und/oder viertes Informationssignal vorgegebene Distanz, und/oder
• eine Anweisung zur Bewegung eines Cursors auf einem Bildschirm (102) an eine zuvor gespeicherte Position.

5. Konfigurationsverfahren einer Maus (1)nach einem der vorhergehenden Ansprüche, **dadurch gekennzeichnet, dass** es einen Schritt zur Definition einer Ausführungsbedingung umfasst, wobei die erste Anweisung und/oder zweite Anweisung nur ausgeführt wird, solange diese Bedingung erfüllt ist.

6. Konfigurationsverfahren einer Maus (1) nach einem der vorhergehenden Ansprüche, **dadurch gekennzeichnet, dass** es einen Schritt zur Anzeige eines Flussdiagramms (30, 40) auf einem Bildschirm (102) umfasst, wobei das erste und/oder zweite Informationssignal (31, 41, 44, 45) durch eine erste Figur dargestellt wird, die erste und/oder zweite Bedingung (32, 42, 43, 46, 47, 48) durch eine zweite Figur dargestellt wird, und die erste und/oder zweite Anweisung (33, 49, 50, 51) durch eine dritte Figur dargestellt wird.

7. Konfigurationsverfahren einer Maus (1) nach Anspruch 6, **dadurch gekennzeichnet, dass** es einen Schritt zur Verschiebung der ersten und/oder der dritten Figur auf dem Bildschirm (102) mittels der Maus (1) umfasst.

8. Konfigurationsverfahren einer Maus (1) nach einem der Ansprüche 5 oder 6, **dadurch gekennzeichnet, dass** die zweite Figur ein Pfeil ist und dass ein Schritt zur Erstellung dieses Pfeils mit der Maus (1) umfasst ist, wobei ein erstes Ende des Pfeils mit der ersten Figur und ein zweites Ende des Pfeils mit der dritten Figur verbunden ist.

9. Verfahren zur Verwendung einer Computermaus (1) für einen Computer (101), wobei die Maus (1) mindestens vier Freiheitsgrade aufweist und in der Lage ist, für jeden Freiheitsgrad ein Informationssignal (31) zu übertragen,
**dadurch gekennzeichnet, dass** es umfasst:
• die Durchführung des Konfigurationsverfahrens nach einem der vorhergehenden Ansprüche,
• einen Schritt zur Speicherung einer durch das Verfahren erhaltenen Konfiguration der Maus (1), und
• einen Schritt zur Ausführung der ersten und/oder zweiten Anweisung (33, 49, 50, 51), sobald die erste und/oder zweite Bedingung (32, 42, 43, 46, 47, 48) erfüllt ist.

10. Verfahren zur Verwendung einer Computermaus (1) für einen Computer (101), wobei die Maus (1) mindestens vier Freiheitsgrade aufweist und in der Lage ist, für jeden Freiheitsgrad ein Informationssignal (31) zu übertragen,
**dadurch gekennzeichnet, dass** es umfasst:
• einen Schritt zur Speicherung einer Softwarekennung,
• die Durchführung des Konfigurationsverfahrens nach einem der Ansprüche 1 bis 8, und
• einen Schritt zur Zuordnung der Softwarekennung zu einer durch das Verfahren erhaltenen Konfiguration der Maus (1).

11. Computersystem (100), umfassend einen Computer (101), einen Bildschirm (102) und eine Maus (1) mit mindestens vier Freiheitsgraden, die in der Lage ist, ein Informationssignal an den Computer (101) zu übertragen,
**dadurch gekennzeichnet, dass** es Mittel umfasst, um ein Konfigurationsverfahren nach einem der Ansprüche 1 bis 8 und/oder ein Verwendungsverfahren nach einem der Ansprüche 9 bis 10 umzusetzen.

12. Computersystem (100) nach Anspruch 11, **dadurch gekennzeichnet, dass** die Maus (1) mindestens zwei Tasten (13, 14, 17, 19, 21), vorzugsweise mindestens drei Tasten, insbesondere vier Tasten, umfasst und/oder dass sie mindestens sechs Freiheitsgrade aufweist.

13. Computersystem (100) nach einem der Ansprüche 11 oder 12, **dadurch gekennzeichnet, dass** die Maus (1) eine Sohle (2) und ein oberes Gehäuse (3) umfasst, die durch eine Verbindungsvorrichtung miteinander verbunden sind, die das Neigen des oberen Gehäuses (3) relativ zur Sohle (2) ermöglicht, und/oder dass sie einen Steuerknüppel (8) umfasst, der aus einer Seitenfläche (7) der Maus (1) hervorragt und durch einen Daumen des Benutzers betätigt werden kann.

14. Computerprogrammprodukt mit Anweisungen, die, wenn das Programm von einem Computer (101) ausgeführt wird, diesen dazu veranlassen, das Konfigurationsverfahren nach einem der Ansprüche 1 bis 8 und/oder ein Verwendungsverfahren nach einem der Ansprüche 9 bis 10 umzusetzen.

15. Computerlesbares Speichermedium mit Anweisungen, die, wenn sie von einem Computer (101) ausgeführt werden, diesen dazu veranlassen, das Konfigurationsverfahren nach einem der Ansprüche 1 bis 8 und/oder ein Verwendungsverfahren nach einem der Ansprüche 9 bis 10 umzusetzen.

## Claims

1. A method for configuring a mouse (1) for a computer (101), the mouse (1) comprising at least four degrees of freedom and being able to transmit one non-binary data signal (31) for each degree of freedom of the mouse (1), **characterized in that** it comprises:
- a first step of defining a first data signal (31) able to be sent by the mouse (1), the first data signal (31) being chosen from a first list via a human-machine interface, the human-machine interface especially comprising a computer (101) and a screen (102),
- a second step of defining a first condition (32) relating to the first data signal (31), the first condition (32) being chosen from a second list via the human-machine interface, and
- a third step of defining a first instruction (33) able to be executed by a computer (101), the first instruction (33) being chosen from a third list via the human-machine interface.

2. The configuration method according to the preceding claim, **characterized in that** the mouse comprises a base and an upper housing connected to one another by a connecting device allowing the upper housing to tilt relative to the base and/or **in that** the mouse comprises a joystick projecting from a side of the mouse and suitable for being operated by a user's thumb, and **in that** said information signals are selected from among:
- a first information signal comprising information relating to translational movement of the mouse parallel to a transverse axis (x);
- a second information signal comprising information relating to translational movement of the mouse parallel to a longitudinal axis (y);
- a third information signal comprising information relating to rotation of an upper housing of the mouse around the transverse axis (x) relative to a base of the mouse;
- a fourth information signal comprising information relating to rotation of the upper housing around the longitudinal axis (y);
- a fifth information signal comprising information relating to rotation of a joystick (8) around a vertical axis (z), the joystick projecting from a side of the mouse and suitable for being operated by a user's thumb;
- a sixth information signal comprising information relating to rotation of the joystick (8) around the longitudinal axis (y).

3. The configuring method as claimed in one of the preceding claims, **characterized in that** it comprises:
- a fourth step of defining a second data signal (31, 41, 44, 45) able to be sent by the mouse (1), the second data signal (31, 41, 44, 45) being chosen from the first list via the human-machine interface, and/or
- a fifth step of defining a second condition (32, 42, 43, 46, 47, 48) relating to the first data signal (31, 41, 44, 45) or to the second data signal (31, 41, 44, 45), the second condition (32, 42, 43, 46, 47, 48) being chosen from the second list via the human-machine interface, and/or
- a sixth step of defining a second instruction (33, 49, 50, 51) able to be executed by the computer (101), the second instruction (33, 49, 50, 51) being chosen from the third list via the human-machine interface.

4. The method for configuring a mouse (1) as claimed in one of the preceding claims, **characterized in that** said third list comprises:
- an instruction to move a pointer over a screen (102) in a direction given by a first and/or a second data signal, and/or
- an instruction to move a pointer over a screen (102) by a distance given by a third and/or a fourth data signal, and/or
- an instruction to move a pointer over a screen (102) to a position stored in memory beforehand.

5. The method for configuring a mouse (1) as claimed in one of the preceding claims, **characterized in that** it comprises a step of defining an execution condition, said first instruction and/or said second instruction being able to be executed by a computer (101) provided that the execution condition is validated.

6. The method for configuring a mouse (1) as claimed in one of the preceding claims, **characterized in that** it comprises a step of displaying, on a screen (102), a flowchart (30, 40) in which said first and/or said second data signal (31, 41, 44, 45) is represented by a first figure, said first and/or said second condition (32, 42, 43, 46, 47, 48) is represented by a second figure, and said first and/or said second instruction (33, 49, 50, 51) is represented by a third figure.

7. The method for configuring a mouse (1) as claimed in the preceding claim, **characterized in that** it comprises a step of moving, over the screen (102), said first figure and/or said third figure, by means of the mouse (1).

8. The method for configuring a mouse (1) as claimed in either of claims 5 and 6, **characterized in that** said second figure is an arrow and **in that** it comprises a step of creating said arrow by means of the mouse (1), a first end of the arrow being joined to the first figure, a second end of the arrow being joined to the third figure.

9. A method for using a mouse (1) for a computer (101), the mouse (1) comprising at least four degrees of freedom and being able to transmit one data signal (31) for each degree of freedom of the mouse (1), **characterized in that** it comprises:
- the implementation of the configuring method according to any one of the preceding claims,
- a step of storing a configuration of the mouse (1) obtained through said configuring method, and
- a step of executing said first and/or said second instruction (33, 49, 50, 51) consecutively to the validation of said first and/or said second condition (32, 42, 43, 46, 47, 48).

10. A method for using a mouse (1) for a computer (101), the mouse (1) comprising at least four degrees of freedom and being able to transmit one data signal (31) for each degree of freedom of the mouse (1), **characterized in that** it comprises:
- a step of storing an identifier of a piece of software,
- the implementation of the configuring method according to any one of claims 1 to 8, and
- a step of associating this identifier with a configuration of the mouse (1), which configuration is obtained using said configuring method.

11. A computer system (100) comprising a computer (101), a screen (102) and a mouse (1) comprising at least four degrees of freedom and being able to transmit a data signal to the computer (101), **characterized in that** it comprises means for implementing a configuring method as claimed in one of claims 1 to 8 and/or a using method as claimed in one of claims 9 to 10.

12. The computer system (100) as claimed in the preceding claim, **characterized in that** the mouse (1) comprises at least two buttons (13, 14, 17, 19, 21), preferably at least three buttons and especially four buttons and/or **in that** the mouse (1) comprises at least six degrees of freedom.

13. The computer system (100) as claimed in either of claims 11 and 12, **characterized in that** the mouse (1) comprises a base (2) and a top casing (3) that are joined to each other by a joining device that permits the top casing (3) to incline with respect to the base (2) and/or **in that** it comprises a lever (8) that protrudes from a flank (7) of the mouse (1) and that is able to be actuated by a thumb of a user.

14. A computer-program product comprising instructions that, when the program is executed by a computer (101), lead the latter to implement the configuring method as claimed in one of claims 1 to 8 and/or a using method as claimed in one of claims 9 to 10.

15. A data storage medium readable by a computer (101), the medium containing instructions that, when they are executed by a computer (101), lead the latter to implement the configuring method as claimed in one of claims 1 to 8 and/or a using method as claimed in one of claims 9 to 10.
